# EUROPÄISCHE PATENTSCHRIFT

(11) **EP 2 509 836 B1**
(45) Veröffentlichungstag und Bekanntmachung des Hinweises auf die Patenterteilung: **14.01.2015**
(21) Anmeldenummer: 10785025.7
(22) Anmeldetag: 22.11.2010
(51) Int. Cl.: B60W 20/00, B60W 30/18, B60W 10/08, B60W 10/02, B60K 6/48, F16D 48/06

(54) **VERFAHREN ZUM BETREIBEN EINES ANTRIEBSSTRANGS**
METHOD FOR OPERATING A DRIVETRAIN
PROCÉDÉ POUR FAIRE FONCTIONNER UNE BRANCHE CINÉMATIQUE

(30) Priorität: 10.12.2009 DE 102009054468
(43) Veröffentlichungstag der Anmeldung: 17.10.2012
(73) Patentinhaber: ZF Friedrichshafen AG, 88038 Friedrichshafen (DE)
(72) Erfinder: SCHIELE, Peter, 88079 Kressbronn (DE); PLATZER, Falko, 88048 Friedrichshafen (DE); SOHLER, Michael, 88316 Isny (DE)
(86) Internationale Anmeldenummer: PCT/EP2010/067887
(87) Internationale Veröffentlichungsnummer: WO 2011/069812

(56) Entgegenhaltungen:
- EP-A2- 2 050 641
- WO-A1-2008/028816
- DE-A1- 10 055 737
- DE-A1- 10 158 536
- DE-A1-102006 005 468

## Beschreibung

Die Erfindung betrifft ein Verfahren zum Betreiben eines zumindest ein Getriebe und einen Hybridantrieb umfassenden Antriebsstrangs eines Kraftfahrzeugs nach dem Oberbegriff des Anspruchs 1.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft ein Verfahren zum Betreiben eines Antriebsstrangs, der zumindest ein Getriebe und als Antriebsaggregat einen Hybridantrieb mit einem Verbrennungsmotor und einer elektrischen Maschine umfasst, wobei zwischen den Verbrennungsmotor und die elektrische Maschine des Hybridantriebs eine Kupplung geschaltet ist, und wobei der Antriebsstrang weiterhin ein getriebeinternes Anfahrelement oder ein getriebeexternes Anfahrelement umfasst. Ein solcher Antriebsstrang wird auch als Parallelhybrid bezeichnet.

Bei einem solchen Parallelhybrid bereitet bislang ein kraftstoffsparendes, komfortables und verlustarmes Ankriechen Schwierigkeiten. Unter einem Ankriechen ist ein Betriebsmodus des Antriebsstrangs zu verstehen, in welchem der Antriebsstrang bei unbetätigtem Fahrpedal bzw. Gaspedal rollt. Ein Ankriechen ist von einem Anfahren zu unterscheiden, bei welchem das Fahrpedal bzw. Gaspedals des Antriebsstrangs betätigt wird.

DE 101 58 536 A1 offenbart ein Verfahren zum Betreiben eines Antriebsstrangs eines Kraftfahrzeugs, wobei der Antriebsstrang zumindest einen Hybridantrieb mit einem Verbrennungsmotor und einer elektrischen Maschine, eine zwischen den Verbrennungsmotor und die elektrischen Maschine geschaltete Kupplung, ein zwischen dem Hybridantrieb und einem Abtrieb angeordnetes Getriebe, ein getriebeinternes Anfahrelement, ein Bremspedal und ein Fahrpedal umfasst, wobei zum elektrischen Ankriechen des Kraftfahrzeugs ausgehend von einem Ausgangszustand des Antriebsstrang, in welchem die zwischen den Verbrennungsmotor und die elektrischen Maschine geschaltete Kupplung geöffnet und das Bremspedal betätigt und das Fahrpedal unbetätigt und der Verbrennungsmotor des Hybridantriebs vorzugsweise ausgeschaltet ist, die Kupplung drehmomentübertragend schlupfend betreibbar ist.

Hiervon ausgehend liegt der vorliegenden Erfindung das Problem zu Grunde, ein neuartiges Verfahren zum Betreiben eines ein Getriebe und einen Hybridantrieb umfassenden Antriebsstrangs zu schaffen.

Dieses Problem wird durch ein Verfahren gemäß Anspruch 1 gelöst.

Erfindungsgemäß wird zum elektrischen Ankriechen des Kraftfahrzeugs ausgehend von einem Ausgangszustand des Antriebsstrangs, in welchem die zwischen den Verbrennungsmotor und die elektrischen Maschine geschaltete Kupplung geöffnet und das Bremspedal betätigt und das Fahrpedal unbetätigt und der Verbrennungsmotor des Hybridantriebs vorzugsweise ausgeschaltet ist, so vorgegangen wird, dass mit dem Lösen oder nach dem Lösen des Bremspedals zunächst das Anfahrelement auf Fülldruck gebracht oder auf Fülldruck gehalten wird, dass unmittelbar anschließend die in einem drehzahlgeregelten Modus betriebene elektrische Maschine des Hybridantriebs auf eine Drehzahl gebracht wird, sodass die Drehzahl der elektrischen Maschine um eine definierte Schlupfdrehzahl größer als eine getriebeseitige Drehzahl des Getriebes ist, und dass mit Erreichen dieses Schlupfs durch weiteres Schließen des Anfahrelements, welches in einem Momentstellmodus betrieben wird, am Abtrieb ein Kriechmoment zum Ankriechen aufgebaut wird, wobei hierbei die elektrische Maschine weiterhin im drehzahlgeregelten Modus betrieben wird, um zum Ankriechen den Schlupf aufrecht zu erhalten.

Mit dem erfindungsgemäßen Verfahren ist ein kraftstoffsparendes, komfortables und verlustarmes Ankriechen eines Antriebsstrangs mit einem Parallelhybrid möglich.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Antriebsstrangschema eines Kraftfahrzeugs, bei welchem das erfindungsgemäße Verfahren einsetzbar ist;
- Fig. 2: ein alternatives Antriebsstrangschema eines Kraftfahrzeugs, bei welchem das erfindungsgemäße Verfahren einsetzbar ist; und
- Fig. 3: ein Diagramm zur Verdeutlichung des erfindungsgemäßen Verfahrens zum Betreiben eines Antriebsstrangs.

Die hier vorliegende Erfindung betrifft ein Verfahren zum Betreiben eines zumindest ein Getriebe und einen Hybridantrieb umfassenden Antriebsstrangs eines Kraftfahrzeugs.

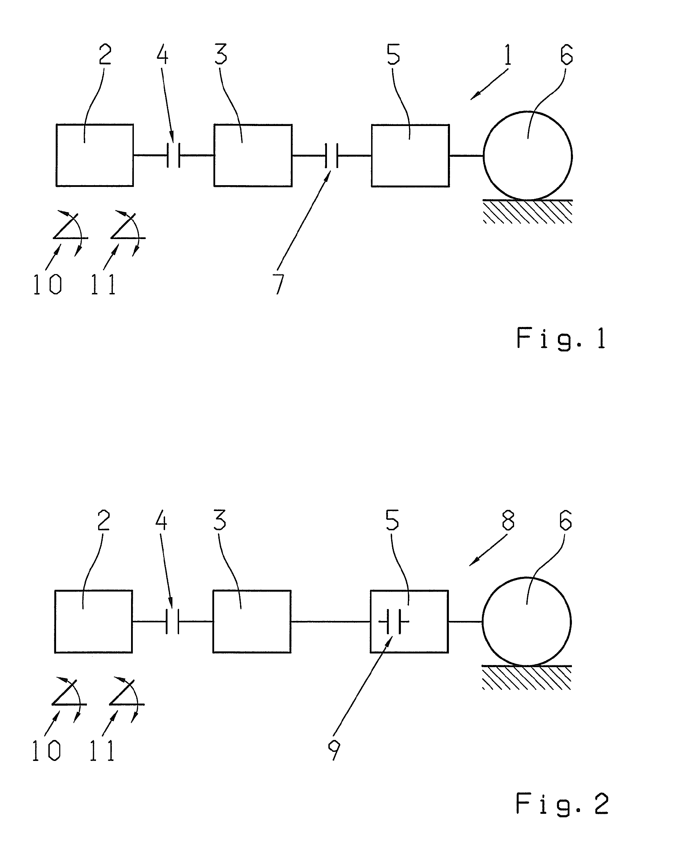

Fig. 1 zeigt exemplarisch ein Antriebsstrangschema eines Kraftfahrzeugs, bei welchen das erfindungsgemäße Verfahren einsetzbar ist. So zeigt Fig. 1 ein Schema eines Antriebsstrangs 1 eines Kraftfahrzeugs, wobei der Antriebsstrang 1 gemäß Fig. 1 einen Hybridantrieb umfasst, der von einem Verbrennungsmotor 2 und einer elektrischen Maschine 3 gebildet ist. Zwischen den Verbrennungsmotor 2 und die elektrischen Maschine 3 ist eine Kupplung 4 geschaltet, die dann, wenn der Antriebsstrang 1 ausschließlich von der elektrischen Maschine 3 betrieben wird, geöffnet ist. Neben dem Hybridantrieb umfasst der Antriebsstrang 1 gemäß Fig. 1 weiterhin ein Getriebe 5, welches das vom Hybridantrieb bereitgestellte Zugkraftangebot auf einem Abtrieb 6, nämlich anzutreibenden Rädern, des Antriebsstrangs 1 umsetzt. Das Getriebe 5 kann zum Beispiel als Automatgetriebe oder als automatisiertes Getriebe ausgeführt sein. Bei einem Automatgetriebe werden Schaltungen ohne Zugkraftunterbrechung und bei einem automatisierten Getriebe werden Schaltungen mit Zugkraftunterbrechung ausgeführt. Beim Antriebsstrang der Fig. 1 ist zwischen den Elektromotor 3 des Hybridantriebs und das Getriebe 5 eine weitere Kupplung 7 geschaltet. Diese Kupplung 7 dient als getriebeexternes Anfahrelement.

Fig. 2 zeigt exemplarisch ein weiteres Antriebsstrangschema eines Kraftfahrzeugs, bei welchen das erfindungsgemäße Verfahren einsetzbar ist, wobei sich der Antriebsstrang 8 des Antriebsstrangschemas der Fig. 2 vom Antriebsstrang 1 des Antriebsstrangschemas der Fig. 1 dadurch unterscheidet, dass die Kupplung 7 bzw. das getriebeexterne Anfahrelement entfällt und durch ein getriebeinternes Anfahrelement 9 ersetzt ist.

Die beiden in Fig. 1 und 2 schematisiert dargestellten Antriebsstränge sind jeweils als Parallelhybrid ausgeführt und verfügen gemäß Fig. 1 und 2 weiterhin jeweils über ein Gaspedal bzw. Fahrpedal 10 und ein Bremspedal 11.

Zusätzlich zu den in Fig. 1 und 2 schematisiert gezeigten Baugruppen dieser Antriebsstränge 1 bzw. 8 verfügen dieselben über weitere, in Fig. 1 und 2 nicht gezeigte Baugruppen, so zum Beispiel über einen nicht gezeigten, elektrischen Energiespeicher, der mit dem Hybridantrieb derart zusammenwirkt, dass der elektrische Energiespeicher dann, wenn die elektrische Maschine 3 des Hybridantriebs generatorisch betrieben wird, stärker aufgeladen, und dann, wenn die elektrische Maschine 3 des Hybridantriebs motorisch betrieben wird, stärker entladen wird.

Weiterhin verfügen die Antriebsstränge der Fig. 1 und 2 über eine vom Hybridantrieb angetriebene, nicht gezeigte Haupthydraulikpumpe, mithilfe derer hydraulische Verbraucher des Antriebsstrangs 1 bzw. 8, insbesondere hydraulische Verbraucher des Getriebes 5, mit hydraulischer Leistung versorgt werden können.

Zusätzlich zu der nicht gezeigten Haupthydraulikpumpe verfügen die Antriebsstränge der Fig. 1 und 2 weiterhin über eine ebenfalls nicht gezeigte Zusatzhydraulikpumpe, die unabhängig vom Hybridantrieb angetrieben wird, um dann, wenn sowohl der Verbrennungsmotor 2 als auch die elektrische Maschine 3 des Hybridantriebs stillstehen, hydraulische Verbraucher des jeweiligen Antriebsstrangs 1 bzw. 8 mit hydraulischer Leistung versorgen zu können.

Die hier vorliegende Erfindung betrifft nun ein Verfahren zum Betreiben eines solchen Antriebsstrangs mit einem Getriebe und einem Hybridantrieb, nämlich solche Details zum Betreiben eines Antriebsstrangs, die das Ankriechen desselben betreffen.

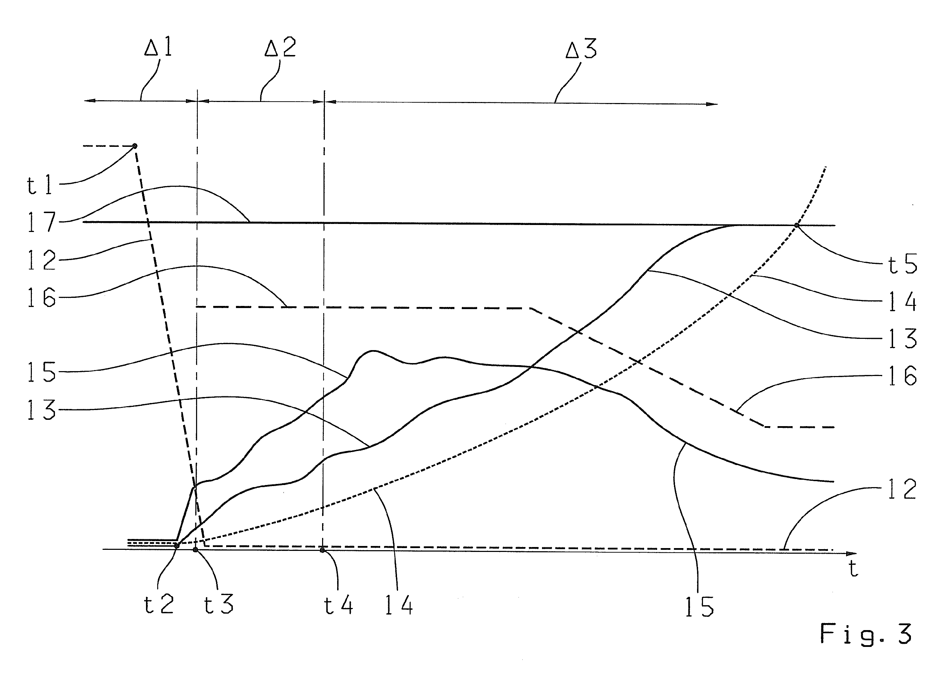

Details des Ankriechens werden dabei nachfolgend auch unter Bezugnahme auf das Diagramm der Fig. 3 beschrieben, wobei im Diagramm der Fig. 3 über der Zeit t verschiedene zeitliche Signalverläufe gezeigt sind, nämlich ein Signalverlauf 12, der einen in Folge einer Betätigung des Bremspedals 11 angeforderten bzw. bereitgestellten Bremsdruck einer Betriebsbremse visualisiert, einen Signalverlauf 13, der den zeitlichen Verlauf einer über das erfindungsgemäße Verfahren aufgebauten Drehzahl der elektrischen Maschine 3 des Hybridantriebs visualisiert, einen Signalverlauf 14, der eine getriebeseitige Drehzahl zeigt, zu welcher die von der elektrischen Maschine 3 bereitgestellte Drehzahl 13 zum Ankriechen einen definierten Schlupf aufweisen soll, einen Signalverlauf 15, der ein in Folge des erfindungsgemäßen Verfahrens im Abtrieb 6 aufbauendes Kriechmoment visualisiert, sowie die Signalverläufe 16 und 17, wobei der Signalverlauf 16 ein maximal zulässiges Kriechmoment und der Signalverlauf 17 eine maximal zulässige Leerlaufdrehzahl der elektrischen Maschine 3 des Hybridantriebs zeigt.

Im Sinne des erfindungsgemäßen Verfahrens wird zum elektrischen Ankriechen des Antriebsstrangs bzw. Kraftfahrzeugs ausgehend von einem Ausgangszustand des Antriebsstrangs, in welchem die zwischen den Verbrennungsmotor 2 des Hybridantriebs und die elektrische Maschine 3 desselben geschaltete Kupplung 4 geöffnet ist, in welchem das Bremspedal 11 betätigt ist, in welchem das Fahrpedal 10 unbetätigt ist, in welchem der Verbrennungsmotor 2 des Hybridantriebs vorzugsweise ausgeschaltet ist und in welchem die elektrische Maschine 3 des Hybridantriebs stillsteht oder nur mit geringer Drehzahl läuft, so vorgegangen, dass mit dem Lösen oder nach dem Lösen des Bremspedals 11 zunächst im Ausführungsbeispiel der Fig. 1 das getriebeexterne Anfahrelement 7 oder im Ausführungsbeispiel der Fig. 2 das getriebeinterne Anfahrelement 9 auf Fülldruck gebracht oder auf Fülldruck gehalten wird.

Dann, wenn hierbei das Anfahrelement 7 bzw. 9 auf Fülldruck gehalten wird, ist dasselbe bereits im Ausgangszustand des Antriebsstrangs auf Fülldruck befüllt. Wird hierbei hingegen das Anfahrelement 7 bzw. 9 auf Fülldruck gebracht, so ist dasselbe im Ausgangszustand des Antriebsstrangs auf einen Druck befüllt, der oberhalb des Fülldrucks liegt, sodass dann mit Lösen oder nach dem Lösen des Bremspedals 11 das Anfahrelement 7 bzw. 9 auf Fülldruck geleert wird.

Unter dem Fülldruck des getriebeexternen Anfahrelements 7 bzw. des getriebeinternen Anfahrelements 9 ist ein Druck zu verstehen, über welchen das Anfahrelement 7 bzw. 9 bis auf den sogenannten Touchpoint, der auch als Anlegepunkt bezeichnet wird, teilweise geschlossen ist. Dann, wenn das Anfahrelement 7 bzw. 9 auf Fülldruck befüllt ist und demnach bis zum Touchpoint bzw. Anlegepunkt teilweise geschlossen ist, ist dieselbe zwar befüllt und damit teilweise geschlossen, es ist jedoch noch keine nennenswerte Momentübertragung über das jeweilige Anfahrelement 7 bzw. 9 möglich.

Dann, wenn am jeweiligen Anfahrelement 7 bzw. 9 der Fülldruck anliegt, wird unmittelbar anschließend die elektrische Maschine 3 des Hybridantriebs auf eine Drehzahl gebracht, sodass die Drehzahl der elektrischen Maschine 3 um eine definierte Schlupfdrehzahl größer ist als eine getriebeseitige Drehzahl des Getriebes 5, wobei hierbei die elektrische Maschine 3 des Hybridantriebs in einem drehzahlgeregelten Modus betrieben wird.

Bei der getriebeseitigen Drehzahl des Getriebes 5, zu welcher die definierte Schlupfdrehzahl der elektrischen Maschine 3 des Hybridantriebs aufgebaut wird, kann es sich zum Beispiel um eine Getriebeeingangsdrehzahl des Getriebes 5 oder um eine mit der aktuellen Getriebeübersetzung multiplizierte Getriebeausgangsdrehzahl des Getriebes 5 handeln.

Im Diagramm der Fig. 3 wird zum Zeitpunkt t1 gemäß dem Signalverlauf 12 das Bremspedal 11 gelöst, wobei unmittelbar anschließend hieran zum Zeitpunkt t2 gemäß dem Signalverlauf 13 die Drehzahl der elektrischen Maschine 3 des Hybridantriebs erhöht wird. Zum Zeitpunkt t3 ist die Drehzahl der elektrischen Maschine 3 um eine definierte Schlupfdrehzahl größer als die durch den Signalverlauf 14 visualisierte, getriebeseitige Drehzahl des Getriebes 5, zum Beispiel als die die Getriebeeingangsdrehzahl oder die mit der aktuellen Getriebeübersetzung multiplizierte Getriebeausgangsdrehzahl.

Mit Erreichen des definierten Schlupfes zwischen der Drehzahl der elektrischen Maschine 3 und der getriebeseitige Drehzahl des Getriebes 5, also im Diagramm der Fig. 3 zum Zeitpunkt t3, wird sodann das noch auf dem Fülldruck befindliche Anfahrelement, nämlich im Ausführungsbeispiel der Fig. 1 das getriebeexterne Anfahrelement 7 und im Ausführungsbeispiel der Fig. 2 das getriebeinterne Anfahrelement 9, weiter geschlossen, um so zum elektrischen Ankriechen am Abtrieb 6 ein Kriechmoment aufzubauen bzw. bereitzustellen. Hierbei wird die elektrische Maschine 3 des Hybridantriebs weiterhin im drehzahlgeregelten Modus betrieben, um beim weiteren Ankriechen den Schlupf zwischen der Drehzahl der elektrischen Maschine 3 und der getriebeseitigen Drehzahl des Getriebes 5 aufrechtzuerhalten. Das Anfahrelement 7 bzw. 9 wird hierbei in einem Momentstellmodus betrieben.

Während des gesamten Vorgangs des elektrischen Ankriechens wird das am Abtrieb 6 bereitgestellte Kriechmoment des Signalverlaufs 15 auf ein maximal zulässiges Grenzkriechmoment des Signalverlaufs 16 begrenzt. Das am Abtrieb 6 anliegende Kriechmoment 15 kann demnach maximal den Wert des maximal zulässigen Grenzkriechmoments 16 annehmen, wobei im Ausführungsbeispiel der Fig. 3 das am Abtrieb 6 bereitgestellte Kriechmoment 15 stets kleiner ist als das Grenzkriechmoment 16.

Das maximal zulässige Grenzkriechmoment 16 ist abhängig von einem von der elektrischen Maschine 3 des Hybridantriebs maximal applizierbaren Drehmoment, wobei das von der elektrischen Maschine 3 maximal applizierbare Drehmoment von dem Ladezustand seines elektrischen Energiespeichers des Antriebsstrangs abhängig ist.

Während des gesamten, elektrischen Ankriechens wird weiterhin die sich ausbildende Kriechgeschwindigkeit überwacht, wobei dann, wenn beim Ankriechen eine maximal zulässige Kriechgeschwindigkeit erreicht wird, eine Geschwindigkeitsregelung für den Antriebsstrang derart durchgeführt wird, dass eine konstante Kriechgeschwindigkeit gewährleistet wird, die der maximal zulässigen Kriechgeschwindigkeit entspricht. Im Ausführungsbeispiel der Fig. 3 wird die maximal zulässige Kriechgeschwindigkeit zum Zeitpunkt t4 erreicht.

Während des gesamten elektrischen Ankriechens wird weiterhin die Drehzahl der elektrischen Maschine 3 auf eine maximal zulässige Leerlaufdrehzahl derselben begrenzt. Die Drehzahl der elektrischen Maschine 3 kann demnach maximal den Wert der maximal zulässigen Leerlaufdrehzahl annehmen, wobei im Ausführungsbeispiel der Fig. 3 gemäß dem Signalverläufen 13 und 17 die elektrische Maschine 3 zum Zeitpunkt t5 die maximal zulässige Leerlaufdrehzahl derselben erreicht.

Wie oben dargestellt, wird zum Zeitpunkt t3 das jeweilige Anfahrelement 7 bzw. 9 ausgehend vom Fülldruck weiter geschlossen und zum Zeitpunkt t4 eine Geschwindigkeitsregelung für das Ankriechen aktiviert. Im Zeitintervall Δ1 befindet sich demnach der jeweilige Antriebsstrang im Stillstand. Während der Zeitintervalle Δ2 und Δ3 kriecht der jeweilige Antriebsstrang, wobei im Zeitintervall Δ3 eine Geschwindigkeitsregelung aktiviert ist. Während der gesamten Zeitintervalle Δ2 und Δ3 wird die elektrische Maschine 3 des Hybridantriebs drehzahlgeregelt und das jeweilige Anfahrelement 7 bzw. 9 in einem Momentstellmodus betrieben.

Wie bereits ausgeführt, verfügt der jeweilige Antriebsstrang 1 bzw. 8 über eine unabhängig vom Verbrennungsmotor 2 sowie der elektrischen Maschine 3 des Hybridantriebs elektrisch betriebene Zusatzhydraulikpumpe, mithilfe derer dann, wenn der Verbrennungsmotor 2 ausgeschaltet ist und auch die elektrische Maschine 3 steht, hydraulische Verbraucher, so zum Beispiel das Anfahrelement 7 bzw. 9, mit hydraulischer Leistung versorgt werden können, um zur Ausführung des erfindungsgemäßen Verfahrens das jeweilige Anfahrelement 7 bzw. 9 mit dem Lösen oder nach dem Lösen des Bremspedals 11 auf Fülldruck zu bringen oder auf Fülldruck zu halten.

Während des gesamten Verfahrens des elektrischen Ankriechens wird die Betätigung des Fahrpedals 10 überwacht. Dann, wenn ein unbetätigtes Fahrpedal 10 vorliegt, wird das Ankriechen weiter durchgeführt. Wird hingegen ein betätigtes Fahrpedal 10 erkannt, so wird das Ankriechen abgebrochen und in ein Anfahren übergewechselt, wobei zum Anfahren die elektrische Maschine 3 in einem momentgeregelten Modus und das Anfahrelement 7 bzw. 9 drehzahlgeregelt betrieben wird.

Das erfindungsgemäße Verfahren erlaubt ein kraftstoffsparendes Ankriechen. Dabei ist vor dem Ankriechen sowie während des Ankriechens der Verbrennungsmotor 2 des Hybridantriebs ausgeschaltet. Weiterhin steht die elektrische Maschine 3 des Hybridantriebs vor dem Ankriechen still oder wird mit minimaler Drehzahl betrieben. Dadurch wird sichergestellt, dass der elektrische Energiespeicher durch die elektrische Maschine 3 des Hybridantriebs vor dem Ankriechen nicht stärker entladen wird, wodurch auch eine Kraftstoffersparnis realisiert werden kann, da der elektrische Energiespeicher um diese vermiedene Entladung später nicht aufgeladen werden muss.

Erst mit Lösen des Bremspedals wird die elektrische Maschine beschleunigt, wodurch die Geräuschentwicklung so gering wie möglich gehalten werden kann. Es kann der Komfort beim Ankriechen gesteigert werden.

Da während des gesamten Ankriechens ein geringer Schlupf zwischen der Drehzahl der elektrischen Maschine 3 (siehe Kurvenverlauf 13) und der getriebeseitigen Drehzahl des Getriebes 5 (siehe Kurvenverlauf 14) eingehalten wird, ergibt sich am Anfahrelement 7 bzw. 9 nur eine geringe Verlustleistung.

Durch diesen Schlupf werden weiterhin möglicherweise auftretende Schwingungen im Antriebsstrang während des Ankriechens wirkungsvoll gedämpft. Auch dadurch kann der der Komfort beim Ankriechen gesteigert werden.

### Bezugszeichen

- 1: Antriebsstrang
- 2: Verbrennungsmotor
- 3: elektrische Maschine
- 4: Kupplung
- 5: Getriebe
- 6: Abtrieb
- 7: getriebeexternes Anfahrelement
- 8: Antriebsstrang
- 9: getriebeinternes Anfahrelement
- 10: Fahrpedal
- 11: Bremspedal
- 12: Signalverlauf
- 13: Signalverlauf
- 14: Signalverlauf
- 15: Signalverlauf
- 16: Signalverlauf
- 17: Signalverlauf

## Patentansprüche

1. Verfahren zum Betreiben eines Antriebsstrangs eines Kraftfahrzeugs, wobei der Antriebsstrang zumindest einen Hybridantrieb mit einem Verbrennungsmotor (2) und einer elektrischen Maschine (3), eine zwischen den Verbrennungsmotor (2) und die elektrischen Maschine (3) geschaltete Kupplung (4), ein zwischen dem Hybridantrieb und einem Abtrieb (6) angeordnetes Getriebe (5), ein getriebeinternes Anfahrelement (9) oder ein getriebeexternes Anfahrelement (7), ein Bremspedal (11) und ein Fahrpedal (10) umfasst, **dadurch gekennzeichnet, dass** zum elektrischen Ankriechen des Kraftfahrzeugs ausgehend von einem Ausgangszustand des Antriebsstrangs, in welchem die zwischen den Verbrennungsmotor (2) und die elektrischen Maschine (3) geschaltete Kupplung (4) geöffnet und das Bremspedal (11) betätigt und das Fahrpedal (10) unbetätigt und der Verbrennungsmotor (2) des Hybridantriebs vorzugsweise ausgeschaltet ist, so vorgegangen wird, dass mit dem Lösen oder nach dem Lösen des Bremspedals (11) zunächst das Anfahrelement (7, 9) auf Fülldruck gebracht oder auf Fülldruck gehalten wird, dass unmittelbar anschließend die in einem drehzahlgeregelten Modus betriebene elektrische Maschine (3) des Hybridantriebs auf eine Drehzahl gebracht wird, sodass die Drehzahl der elektrischen Maschine (3) um eine definierte Schlupfdrehzahl größer ist als eine getriebeseitige Drehzahl des Getriebes (5), und dass mit Erreichen dieses Schlupfs durch weiteres Schließen des Anfahrelements (7, 9), welches in einem Momentstellmodus betrieben wird, am Abtrieb (6) ein Kriechmoment zum Ankriechen aufgebaut wird, wobei hierbei die elektrische Maschine (3) weiterhin im drehzahlgeregelten Modus betrieben wird, um zum Ankriechen den Schlupf aufrecht zu erhalten.

2. Verfahren nach Anspruch 1, **dadurch gekennzeichnet, dass** im Ausgangszustand das getriebeinterne oder getriebeexterne Anfahrelement (7, 9) bereits auf Fülldruck befüllt ist, sodass mit dem Lösen oder nach dem Lösen des Bremspedals (11) dasselbe auf Fülldruck gehalten wird.

3. Verfahren nach Anspruch 1, **dadurch gekennzeichnet, dass** im Ausgangszustand das getriebeinterne oder getriebeexterne Anfahrelement (7, 9) auf mehr als Fülldruck befüllt ist, sodass mit dem Lösen oder nach dem Lösen des Bremspedals (11) dasselbe auf Fülldruck geleert wird.

4. Verfahren nach einem der Ansprüche 1 bis 3, **dadurch gekennzeichnet, dass** dann, wenn am Anfahrelement (7, 9) der Fülldruck anliegt, unmittelbar anschließend die elektrische Maschine (3) auf eine Drehzahl gebracht wird, sodass die Drehzahl derselben um eine definierte Schlupfdrehzahl größer ist als eine Getriebeeingangsdrehzahl des Getriebes (5).

5. Verfahren nach einem der Ansprüche 1 bis 3, **dadurch gekennzeichnet, dass** dann, wenn am Anfahrelement (7, 9) der Fülldruck anliegt, unmittelbar anschließend die elektrische Maschine (3) auf eine Drehzahl gebracht wird, sodass die Drehzahl derselben um eine definierte Schlupfdrehzahl größer ist als eine mit der aktuellen Getriebeübersetzung multiplizierte Getriebeausgangsdrehzahl des Getriebes (5).

6. Verfahren nach einem der Ansprüche 1 bis 5, **dadurch gekennzeichnet, dass** während des gesamten elektrischen Ankriechens das am Abtrieb bereitgestellte Kriechmoment auf ein maximal zulässiges Kriechmoment begrenzt wird, wobei das maximal zulässige Kriechmoment von einem von der elektrischen Maschine (3) des Hybridantriebs maximal applizierbaren Drehmoment abhängig ist.

7. Verfahren nach einem der Ansprüche 1 bis 6, **dadurch gekennzeichnet, dass** dann, wenn beim Ankriechen eine maximal zulässige Kriechgeschwindigkeit erreicht wird, eine Geschwindigkeitsregelung durchgeführt wird, um eine konstante Kriechgeschwindigkeit zu gewährleisten.

8. Verfahren nach einem der Ansprüche 1 bis 7, **dadurch gekennzeichnet, dass** während des gesamten elektrischen Ankriechens die Drehzahl der elektrischen Maschine (3) auf eine maximal zulässiges Leerlaufdrehzahl derselben begrenzt wird.

9. Verfahren nach einem der Ansprüche 1 bis 8, **dadurch gekennzeichnet, dass** zum elektrischen Ankriechen das Anfahrelement (7, 9) mit Hilfe einer elektrisch betriebenen Zusatzhydraulikpumpe auf Fülldruck gebracht oder auf Fülldruck gehalten wird.

10. Verfahren nach einem der Ansprüche 1 bis 9, **dadurch gekennzeichnet, dass** während des gesamten elektrischen Ankriechens die Betätigung des Fahrpedals (10) überwacht wird, wobei dann, wenn ein unbetätigtes Fahrpedal (10) vorliegt, das Ankriechen weiter durchgeführt wird, wohingegen dann, wenn ein betätigtes Fahrpedal vorliegt, das Ankriechen abgebrochen und ein Anfahren durchgeführt wird, wobei zum Anfahren die elektrische Maschine (3) in einem momentgeregelten Modus und das Anfahrelement (7, 9) drehzahlgeregelt betrieben wird.

## Claims

1. Method for operating a drivetrain of a motor vehicle, the drivetrain comprising at least one hybrid drive with an internal combustion engine (2) and with an electric machine (3), a clutch (4) connected between the internal combustion engine (2) and the electric machine (3), a transmission (5) arranged between the hybrid drive and an output (6), a transmission-internal starting element (9) or a transmission-external starting element (7), a brake pedal (11) and an accelerator pedal (10), **characterized in that**, for the electrical crawling of the motor vehicle from an initial state of the drivetrain, in which the clutch (4) connected between the internal combustion engine (2) and the electric machine (3) is opened and the brake pedal (11) is actuated and the accelerator pedal (10) is non-actuated and the internal combustion engine (2) of the hybrid drive is preferably switched off, the procedure is such that, with the release or after the release of the brake pedal (11), first the starting element (7, 9) is brought to filling pressure or is held at filling pressure, that, immediately thereafter, the electric machine (3), operated in a variable-speed mode, of the hybrid drive is brought to a rotational speed, so that the rotational speed of the electric machine (3) is higher by the amount of a defined wheel-slip rotational speed than a transmission-side rotational speed of the transmission (5), and that, when this wheel slip is reached, a crawl torque for crawling is built up at the output (6) by means of the further closing of the starting element (7, 9) which is operated in a torque-setting mode, in this case the electric machine (3) continuing to be operated in the variable-speed mode, in order to maintain the wheel slip for crawling.

2. Method according to Claim 1, **characterized in that**, in the initial state, the transmission-internal or transmission-external starting element (7, 9) is already filled to filling pressure, so that, with the release or after the release of the brake pedal (11), the said starting element is held at filling pressure.

3. Method according to Claim 1, **characterized in that**, in the initial state, the transmission-internal or transmission-external starting element (7, 9) is filled to more than filling pressure, so that, with the release or after the release of the brake pedal (11), the said starting element is emptied to filling pressure.

4. Method according to one of Claims 1 to 3, **characterized in that**, when the filling pressure prevails at the starting element (7, 9), immediately thereafter the electric machine (3) is brought to a rotational speed, so that the rotational speed of the latter is higher by the amount of a defined wheel-slip rotational speed than a transmission input rotational speed of the transmission (5).

5. Method according to one of Claims 1 to 3, **characterized in that**, when the filling pressure prevails at the starting element (7, 9), immediately thereafter the electric machine (3) is brought to a rotational speed, so that the rotational speed of the latter is higher by the amount of a defined wheel-slip rotational speed than a transmission output rotational speed of the transmission (5), multiplied by the current transmission step-up ratio.

6. Method according to one of Claims 1 to 5, **characterized in that**, during the entire electrical crawling, the crawl torque provided at the output is limited to a maximum permissible crawl torque, the maximum permissible crawl torque being dependent upon a maximum torque applicable by the electric machine (3) of the hybrid drive.

7. Method according to one of Claims 1 to 6, **characterized in that**, when a maximum permissible crawl speed is reached during crawling, speed control is carried out in order to ensure a constant crawl speed.

8. Method according to one of Claims 1 to 7, **characterized in that**, during the entire electrical crawling, the rotational speed of the electric machine (3) is limited to a maximum permissible idling rotational speed of the latter.

9. Method according to one of Claims 1 to 8, **characterized in that**, for electrical crawling, the starting element (7, 9) is brought to filling pressure or held at filling pressure with the aid of an electrically operated additional hydraulic pump.

10. Method according to one of Claims 1 to 9, **characterized in that**, during the entire electrical crawling, the actuation of the accelerator pedal (10) is monitored, and, when a non-actuated accelerator pedal (10) is present, crawling is carried out further, whereas, when an actuated accelerator pedal is present, crawling is discontinued and starting is carried out, for starting purposes the electric machine (3) being operated in variable-torque mode and the starting element (7, 9) being operated in a variable-speed mode.

## Revendications

1. Procédé pour faire fonctionner une chaîne cinématique d'un véhicule automobile, la chaîne cinématique comprenant au moins un entraînement hybride avec un moteur à combustion interne (2) et une machine électrique (3), un embrayage (4) branché entre le moteur à combustion interne (2) et la machine électrique (3), une transmission (5) disposée entre l'entraînement hybride et une prise de force (6), un élément de démarrage interne à la transmission (9) ou un élément de démarrage externe à la transmission (7), une pédale de frein (11) et une pédale d'accélération (10), **caractérisé en ce que** pour le démarrage électrique lent du véhicule automobile à partir d'un état de départ de la chaîne cinématique dans lequel l'embrayage (4) branché entre le moteur à combustion interne (2) et la machine électrique (3) est ouvert et la pédale de frein (11) est actionnée et la pédale d'accélération (10) n'est pas actionnée et le moteur à combustion interne (2) de l'entraînement hybride est de préférence déconnecté, on procède de telle sorte que conjointement au relâchement ou après le relâchement de la pédale de frein (11), l'élément de démarrage (7, 9) soit tout d'abord amené à une pression de remplissage ou soit maintenu à une pression de remplissage, qu'immédiatement après, la machine électrique (3) de l'entraînement hybride fonctionnant en mode régulé en régime soit amenée à un régime tel que le régime de la machine électrique (3) soit supérieur d'un régime de patinage défini à un régime côté transmission de la transmission (5), et qu'à l'obtention de ce patinage, par une fermeture supplémentaire de l'élément de démarrage (7, 9) qui fonctionne en mode de commande du couple, un couple de roulage lent s'établisse au niveau de la prise de force (6) pour le démarrage lent, la machine électrique (3) fonctionnant toujours dans ce cas en mode régulé en régime, afin de maintenir le patinage en vue du démarrage lent.

2. Procédé selon la revendication 1, **caractérisé en ce qu'**à l'état de départ, l'élément de démarrage (7, 9) interne à la transmission ou externe à la transmission est déjà rempli à la pression de remplissage, de sorte que la pédale de frein (11) soit maintenue à la pression de remplissage lors de son relâchement ou après son relâchement.

3. Procédé selon la revendication 1, **caractérisé en ce qu'**à l'état de départ, l'élément de démarrage (7, 9) interne à la transmission ou externe la transmission est remplie à une pression supérieure à la pression de remplissage de sorte que la pédale de frein (11) soit vidée à la pression de remplissage lors de son relâchement ou après son relâchement.

4. Procédé selon l'une quelconque des revendications 1 à 3, **caractérisé en ce que** lorsque la pression de remplissage s'applique à l'élément de démarrage (7, 9), immédiatement après, la machine électrique (3) est amenée à un régime tel que son régime soit supérieur d'un régime de patinage défini à un régime d'entrée de transmission de la transmission (5).

5. Procédé selon l'une quelconque des revendications 1 à 3, **caractérisé en ce que** lorsque la pression de remplissage s'applique à l'élément de démarrage (7, 9), immédiatement après, la machine électrique (3) est amenée à un régime tel que son régime soit supérieur d'un régime de patinage défini à un régime de sortie de transmission de la transmission (5), multiplié par le rapport de démultiplication actuel de la transmission.

6. Procédé selon l'une quelconque des revendications 1 à 5, **caractérisé en ce que** pendant tout le démarrage électrique lent, le couple de roulage lent fourni au niveau de la prise de force est limité à un couple de roulage lent maximal admissible, le couple de roulage lent maximal admissible dépendant d'un couple de rotation maximal pouvant être appliqué par la machine électrique (3) de l'entraînement hybride.

7. Procédé selon l'une quelconque des revendications 1 à 6, **caractérisé en ce que** lorsqu'une vitesse de roulage lent maximale admissible est atteinte lors du démarrage lent, une régulation de vitesse est effectuée afin de garantir une vitesse de roulage lent constante.

8. Procédé selon l'une quelconque des revendications 1 à 7, **caractérisé en ce que** pendant tout le démarrage électrique lent, le régime de la machine électrique (3) est limité à un régime de marche à vide maximal admissible de celle-ci.

9. Procédé selon l'une quelconque des revendications 1 à 8, **caractérisé en ce que** pour le démarrage électrique lent, l'élément de démarrage (7, 9) est amené à la pression de remplissage ou est maintenu à la pression de remplissage à l'aide d'une pompe hydraulique supplémentaire à commande électrique.

10. Procédé selon l'une quelconque des revendications 1 à 9, **caractérisé en ce que** pendant tout le démarrage électrique lent, l'actionnement de la pédale d'accélération (10) est surveillé, et lorsque la pédale d'accélération (10) n'est pas actionnée, le démarrage lent continue, tandis que lorsque la pédale d'accélération est actionnée, le démarrage lent est interrompu et un démarrage est effectué, la machine électrique (3) fonctionnant pour le démarrage en mode régulé en couple et l'élément de démarrage (7, 9) fonctionnant en mode régulé en régime.
